# EUROPÄISCHE PATENTSCHRIFT

(11) **EP 4 453 120 B1**
(45) Veröffentlichungstag und Bekanntmachung des Hinweises auf die Patenterteilung: **19.02.2025**
(21) Anmeldenummer: 22840633.6
(22) Anmeldetag: 19.12.2022
(51) Int. Cl.: C09J 11/06, C09J 9/00, C09J 7/30

(54) **INDIKATORMISCHUNG**
INDICATOR MIXTURE
MÉLANGE INDICATEUR

(30) Priorität: 21.12.2021 DE 102021006273
(43) Veröffentlichungstag der Anmeldung: 30.10.2024
(73) Patentinhaber: Lohmann GmbH & Co. KG, 56567 Neuwied (DE)
(72) Erfinder: WEGNER, Tobias, 56237 Wittgert (DE)
(86) Internationale Anmeldenummer: PCT/EP2022/086753
(87) Internationale Veröffentlichungsnummer: WO 2023/117975

(56) Entgegenhaltungen:
- WO-A1-00/22060
- WO-A2-2006/008251
- DE-A1- 10 063 066

## Beschreibung

Die Erfindung bezieht sich auf eine Indikatormischung gemäß dem Anspruch 1 sowie auf einen chemischen Indikator gemäß dem Anspruch 6.

Aus der DE 10 2019 004 662 A1 ist ein Klebefilm bekannt, welcher einen Klebstoff, einen kationischen Initiator und einen pH-sensitiven Farbstoff aufweist. Durch Bestrahlung des Klebefilms mit UV-Licht in einem unvernetzten Zustand erzeugt der Initiator eine Säure, mittels welcher der Klebstoff vernetzt wird und der Farbstoff einen Farbumschlag durchläuft. Hierdurch kann mittels des Farbumschlags die Vernetzung des Klebstoffs beziehungsweise die Bestrahlung kenntlich gemacht werden. Da der Farbumschlag auf einer dynamischen Reaktion basiert, ist die Farbe des Farbstoffs zeitlich veränderlich, beispielsweise durch eine Änderung der Menge an vorhandenen Edukten und Produkten.

Ferner ist bekannt, mittels Bestrahlung vernetzenden Klebstoffen einen Photosensibilisator beizufügen, um einen Wellenlängenbereich der Bestrahlung, innerhalb welchem die Vernetzung des Klebstoffs erreicht werden kann, zu erweitern. Der Photosensibilisator ist hierbei völlig von dem verwendeten Farbstoff unabhängig und es reichen bereits geringe Mengen an Photosensibilisator, um den gewünschten Effekt zu erzielen.

Aus der DE 100 63 066 A1 ist eine strahlungsempfindliche Zusammensetzung bekannt, welche eine kationisch oder säurekatalytisch polymerisierbare oder vernetzbare Verbindung oder eine Verbindung, die unter der Einwirkung von Säure in einem Entwickler ihre Löslichkeit erhöht sowie mindestens ein Diaryliodoniumsalz aufweist. Aus der WO 2006/008251 A2 ist ein Verfahren bekannt, welches eine Aktivierung eines Katalysators durch Bestrahlung einer Mischung, welche den Katalysator enthält und eine Applizierung der Mischung auf ein Substrat umfasst.

Aus der WO 00/22060 A1 ist ein farbiger Klebstoff bekannt, welcher einen Farbstoff enthält, der vor einer Bestrahlung eine erste Farbe und nach der Bestrahlung eine zweite Farbe aufweist.

Die Aufgabe der Erfindung besteht insbesondere darin, eine gattungsgemäße Indikatormischung bereitzustellen, welche verbesserte Eigenschaften bezüglich einer

Kenntlichmachung aufweist. Die Aufgabe wird erfindungsgemäß durch die Merkmale der Ansprüche 1 und 6 gelöst, während vorteilhafte Ausgestaltungen und Weiterbildungen der Erfindung den Unteransprüchen entnommen werden können.

Die Erfindung geht aus von einer Indikatormischung mit zumindest einem Farbstoff, welche zur gemeinsamen Verwendung mit zumindest einer Beschichtungsmasse und zumindest einem Vernetzer vorgesehen ist.

Es wird vorgeschlagen, dass die Indikatormischung zumindest einen Photosensibilisator aufweist, wobei das Masseverhältnis von Photosensibilisator und Farbstoff 10-100:1, vorteilhaft 25-90:1 und besonders vorteilhaft 40-80:1 beträgt. Die angegebenen Verhältnisse sollen hierbei so verstanden werden, dass auf ein Milligramm des Farbstoffs 10-100, 25-90 oder 40-80 Milligramm des Photosensibilisators folgen. Insbesondere weist die Indikatormischung ein festes Mischungsverhältnis von Photosensibilisator und Farbstoff auf, wobei verschiedene Arten von Indikatormischungen unterschiedliche Mischungsverhältnisse innerhalb der angegebenen Verhältnisse aufweisen können. Hierdurch kann eine langanhaltende und sichere Kenntlichmachung erreicht werden. Vorteilhaft können der Farbstoff und der angeregte Photosensibilisator gemeinsam einen Exciplex ausbilden, in welchem der Farbstoff eine Exciplex-Farbe aufweist, welche sich von einer Grundfarbe des Farbstoffs unterscheidet. Besonders vorteilhaft kann der Exciplex, welcher unter normalen Bedingungen nach einer bestimmten Zeit zerfallen würde, durch die Vernetzung der Beschichtungsmasse am Zerfall gehindert werden. Die im Verhältnis zum Farbstoff große Menge an vorhandenem Photosensibilisator verhindert hierbei, dass der Farbstoff stattdessen von dem Vernetzer beeinflusst wird, wie es im Stand der Technik der Fall ist.

Die Indikatormischung ist zu einer Mischung mit der Beschichtungsmasse in einem unvernetzten Zustand und dem Vernetzer vorgesehen. Vorteilhaft ist die Indikatormischung mit verschiedenen Arten von Beschichtungsmassen und/oder Vernetzern verwendbar. Besonders vorteilhaft ist die Indikatormischung als separates Produkt erhältlich, wobei unterschiedliche Arten von Indikatormischungen mit unterschiedlichen Arten von Beschichtungsmassen und/oder Vernetzern kompatibel sind.

Unter einer "Beschichtungsmasse" soll eine Masse verstanden werden, welche dazu vorgesehen ist, in einem Beschichtungsverfahren aufgetragen zu werden und anschließend eine Schicht zu bilden. Denkbar wäre, dass die Beschichtungsmasse dazu vorgesehen ist, eine äußere Schicht zu bilden, welche beispielsweise eine Schutzfunktion bereitstellen kann, insbesondere könnte die Beschichtungsmasse als eine Lackmasse ausgebildet sein. Vorzugsweise ist die Beschichtungsmasse als eine Klebstoffmasse, insbesondere eine Haftklebstoffmasse, ausgebildet. Besonders bevorzugt liegt die Beschichtungsmasse gemeinsam mit dem Vernetzer nach dem Beschichtungsverfahren in Form eines Klebefilms vor. Der Klebefilm könnte dazu vorgesehen sein, zumindest zwei Fügepartner miteinander zu verbinden. In diesem Fall kann ein Farbumschlag des Farbstoffs dazu verwendet werden, sicherzustellen, dass die Vernetzung des Klebefilms abgeschlossen ist und die Fügepartner bewegt werden können, ohne dass ein Lösen der Fügepartner voneinander befürchtet werden muss. Vorzugsweise ist zumindest einer der Fügepartner zumindest teilweise transparent ausgebildet, wodurch der Farbumschlag des Farbstoffs von außen beobachtet werden kann. Alternativ könnte der Klebefilm als Teil eines chemischen Indikators ausgebildet sein, welcher zur Verbindung mit einem zu bestrahlenden Objekt vorgesehen ist. Es wäre möglich, dass der chemische Indikator irreversibel mit dem Objekt verbindbar ist, vorzugsweise ist der chemische Indikator reversibel mit dem Objekt verbindbar. Der chemische Indikator kann beispielsweise als ein Klebeband, eine Klebefolie, ein Klebestreifen, eine Klebeplatte oder ein klebendes Stanzteil ausgebildet sein. Alternativ kann der chemische Indikator auch als ein trägerloser Transferklebefilm ausgebildet sein.

Die als Klebstoffmasse ausgebildete Beschichtungsmasse weist insbesondere zumindest einen Klebstoff auf. Der Klebstoff kann als ein beliebiger, strahlungsvernetzender Klebstoff ausgebildet sein. Eigenschaften des Klebstoffs in einem vernetzten Zustand und einem unvernetzten Zustand sind insbesondere von dem jeweiligen Anwendungsbereich abhängig. Wenn der Klebstoff dazu vorgesehen ist, Fügepartner zu verbinden, kann der Klebstoff in dem unvernetzten Zustand in flüssiger Form vorliegen. Vorzugsweise liegt der Klebstoff in dem unvernetzten Zustand in fester oder hochviskoser Form vor und ist besonders bevorzugt in dem unvernetzten Zustand haftklebrig ausgebildet. Hierdurch kann der chemische Indikator auf einfache Weise mit dem zu bestrahlenden Objekt verbunden werden. Alternativ könnte der Klebstoff in dem unvernetzten Zustand frei von klebenden Oberflächen sein, in diesem Fall kann ein zusätzlicher Klebstoff verwendet werden. Der zusätzliche Klebstoff ist insbesondere haftklebrig ausgebildet und bildet entweder einen Teil des Klebefilms oder einen auf den Klebefilm aufkaschierten weiteren Klebefilm aus. Bevorzugt ist der Klebstoff in dem vernetzten Zustand haftklebend ausgebildet. Denkbar wäre auch, dass der Klebstoff in dem vernetzten Zustand frei von klebenden Oberflächen ist, dies eignet sich insbesondere für den Fall, dass der Klebstoff zur Verbindung der Fügepartner vorgesehen ist. Beispielsweise könnte der Klebstoff zumindest eine Substanz aus der Stoffklasse der Acrylate, Polyurethane und/oder Epoxidharze aufweisen. Ferner kann der Klebstoff eine beliebige Art und Menge an Additiven aufweisen, wie beispielsweise Füllstoffe, weitere Farbstoffe und/oder Tackifier.

Der Vernetzer ist dazu vorgesehen, bei der Bestrahlung des Klebstoffs eine Vernetzungsreaktion zu initiieren. Vorteilhaft initiiert der Vernetzer unabhängig von dem Photosensibilisator die Vernetzungsreaktion, alternativ oder zusätzlich kann der Vernetzer die Vernetzungsreaktion basierend auf einer von dem Photosensibilisator übertragenen Aktivierungsenergie initiieren. Die Zusammensetzung des Vernetzers ist abhängig von dem jeweils verwendeten Klebstoff. Beispielsweise könnte der Vernetzer Substanzen mit zumindest einer Isocyanatgruppe und/oder zumindest einer Vinylgruppe aufweisen. Insbesondere könnte der Vernetzer zumindest einen anionischen Initiator aufweisen.

Eine Wellenlänge der Bestrahlung, durch welche der Klebstoff vernetzbar ist, ist insbesondere beliebig wählbar. Zum Beispiel könnte der Klebstoff mittels Infrarotstrahlung, Mikrowellenstrahlung und/oder Röntgenstrahlung vernetzbar sein. Bevorzugt ist der Klebstoff durch UV-Strahlung vernetzbar, besonders bevorzugt liegt ein Absorptionsbereich des Photosensibilisators im UV-Bereich. Unter einem "Absorptionsbereich" des Photosensibilisators soll ein Wellenlängenbereich verstanden werden, wobei der Photosensibilisator in der Lage ist, Strahlung innerhalb dieses Wellenlängenbereichs zu absorbieren und hierdurch den angeregten Zustand zu erreichen. Vorzugsweise ist der Photosensibilisator dazu vorgesehen, zumindest teilweise in dem angeregten Zustand zu verbleiben und mit dem Farbstoff den Exciplex zu bilden. Insbesondere verbleibt der Photosensibilisator vollständig in dem angeregten Zustand, alternativ kann der Photosensibilisator teilweise zurück in einen Grundzustand fallen und dadurch eine Aktivierungsenergie zur Initiierung der Vernetzungsreaktion an den Vernetzer abgeben. In diesem Fall verringert sich der Anteil des Photosensibilisators, welcher in den Grundzustand zurückfallt, insbesondere schrittweise, wobei nach der Bestrahlung vorzugsweise zumindest ein Großteil des Photosensibilisators als Teil des Exciplex vorliegt. Beispielsweise könnte der Absorptionsbereich des Photosensibilisators im UV-A-Bereich, welcher 380-315 nm beträgt, oder im UV-C-Bereich, welcher 280-100 nm beträgt, liegen. Der Klebstoff kann mittels einer beliebigen Dosis und Dauer der Bestrahlung vernetzbar sein, welche insbesondere von einer jeweiligen Anwendungsform des Klebstoffs abhängt, beispielsweise von einer Dicke des Klebefilms. Vorzugsweise ist der Klebstoff mittels einer Dosis von mindestens 1650 mJ/cm² und einer Dauer von mindestens 5 Sekunden vernetzbar. Bevorzugt ist eine Vernetzungsreaktion des Klebstoffs als eine Dunkelreaktion ausgebildet, besonders bevorzugt beträgt eine Offenzeit, innerhalb welcher nach einer Initiierung der Vernetzungsreaktion der Klebstoff noch klebrig genug ist, um Fügepartner verbinden zu können, mindestens 10 Sekunden, bevorzugt zwischen 10 Sekunden und 60 Minuten. Nach Ablauf der Offenzeit ist die Vernetzung des Klebstoffs derart fortgeschritten, dass insbesondere kein ausreichender Tack zur Verbindung der Fügepartner mehr vorhanden ist. Hierdurch kann vorteilhaft die Indikatormischung zur Kenntlichmachung einer UV-Bestrahlung verwendet werden, welche eine der am meisten verwendeten Arten der Bestrahlung ist, wodurch ein größtmöglicher Anwendungsbereich der Indikatormischung erreicht werden kann.

Der Photosensibilisator weist zumindest ein Isopropylthioxanthon auf. Insbesondere kann der Photosensibilisator genau ein Isopropylthioxanthon oder eine Mehrzahl verschiedener Isopropylthioxanthone aufweisen. Es wäre denkbar, dass die Indikatormischung zusätzlich noch weitere Photosensibilisatoren aufweist, bevorzugt ist die Indikatormischung frei von weiteren Photosensibilisatoren. Hierdurch können ein stabiler Exciplex und ein deutlich sichtbarer Farbumschlag ermöglicht werden.

Der Farbstoff weist zumindest ein Anthrachinon, insbesondere 1,4-Bis(butylamino)antrachinon, auf. Hierdurch können ein stabiler Exciplex und ein deutlich sichtbarer Farbumschlag ermöglicht werden. Im Fall, dass der Photosensibilisator Isopropylthioxanthon und der Farbstoff 1,4-Bis(butylamino)antrachinon aufweisen, kann ein Farbumschlag von einer blauen Grundfarbe zu einer gelblichen Exciplex-Farbe beobachtet werden.

Ferner wird eine Beschichtungsmasse vorgeschlagen, welche die Indikatormischung und den Vernetzer aufweist. Vorteilhaft sind der Farbstoff, der Photosensibilisator, der Vernetzer und die restliche Beschichtungsmasse derart gewählt, dass sämtliche Komponenten miteinander kompatibel sind. Hierdurch kann ein Misslingen der Kenntlichmachung durch eine Verwendung von nicht miteinander kompatiblen Komponenten verhindert werden. Vorteilhaft kann die Indikatormischung als Teil eines anwendungsbereiten Produkts bereitgestellt werden, wodurch beim Anwender zusätzliche Schritte wie das Mischen der Komponenten entfallen.

Zusätzlich wird vorgeschlagen, dass die Beschichtungsmasse als eine Klebstoffmasse ausgebildet ist und zumindest einen Klebstoff aufweist. Hierdurch kann auf zusätzliche Haftungsmittel zur Befestigung eines chemischen Indikators mit der Indikatormischung verzichtet werden. Vorteilhaft kann die Beschichtungsmasse verwendet werden, um Fügepartner miteinander zu verbinden.

Weiterhin wird vorgeschlagen, dass der Klebstoff zumindest ein Epoxidharz aufweist. Beispielsweise kann der Klebstoff ein aromatisches Epoxidharz, ein bisphenol-basiertes Epoxidharz, ein Novolak-Epoxidharz, ein halogenisiertes Epoxidharz, ein aliphatisches Epoxidharz und/oder ein cycloaliphatisches Epoxidharz aufweisen. Insbesondere kann der Klebstoff genau ein Epoxidharz oder eine Mehrzahl an unterschiedlichen Epoxidharzen aufweisen. Hierdurch kann ein stabiler Exciplex erreicht werden. Vorteilhaft kann der Exciplex in dem vernetzten Epoxidharz "eingefroren" werden.

Darüber hinaus wird vorgeschlagen, dass der Vernetzer zumindest einen kationischen Initiator aufweist. Insbesondere kann der Vernetzer genau einen kationischen Initiator oder eine Mehrzahl an unterschiedlichen kationischen Initiatoren aufweisen. Hierdurch kann eine Vernetzungsreaktion des Klebstoffs auf einfache Weise initiiert werden.

Die Erfindung geht in einem weiteren Aspekt von einem chemischen Indikator aus, welcher zumindest einen Träger und die Indikatormischung aufweist. Ferner weist der chemische Indikator die Beschichtungsmasse und den Vernetzer auf, wobei die Beschichtungsmasse entweder bereits die Indikatormischung enthält oder die Indikatormischung erst bei der Herstellung des chemischen Indikators in die Beschichtungsmasse gemischt wird. Der Träger ist insbesondere zu einer Aufnahme der Indikatormischung in zumindest einem Zustand vorgesehen. Beispielsweise könnte der Träger zumindest einen Zellstoff und/oder zumindest einen Kunststoff aufweisen. Denkbar wäre, dass der Träger als ein Release-Liner ausgebildet und lösbar mit der Indikatormischung, welche den Klebstoff und den Vernetzer aufweist und als ein trägerloser Transferklebefilm ausgebildet ist, verbunden ist. Alternativ könnte der Träger unlösbar mit der Indikatormischung verbunden und insbesondere Teil eines Klebebands, einer Klebefolie, eines Klebestreifens, einer Klebeplatte oder eines klebenden Stanzteils sein. Hierdurch kann eine einfache und wenig fehleranfällige Kenntlichmachung erreicht werden.

Vorstellbar wäre, dass der Träger zumindest eine Einbuchtung, Nut und/oder Rille aufweist, in welche die Indikatormischung eingefüllt ist. Um eine einfache Herstellung des chemischen Indikators zu erreichen, wird vorgeschlagen, dass die Indikatormischung zumindest Teil des Klebefilms ist, mit dem der Träger beschichtet ist. Im Fall, dass die Beschichtungsmasse die Indikatormischung und den Vernetzer aufweist, bildet die Beschichtungsmasse den Klebefilm vollständig aus. Insbesondere ist der chemische Indikator mittels eines Rolle-zu-Rolle-Prozesses herstellbar. Vorteilhaft ist der chemische Indikator in Form einer Bahn ausgebildet, welche besonders vorteilhaft später in Einzelteile zerlegbar ist, wobei jedes Einzelteil für jeweils eine Kenntlichmachung verwendbar ist. Beispielsweise könnte der chemische Indikator durch ein Abreißen, vorzugsweise an einer Perforierung des chemischen Indikators, oder ein Abschneiden zerlegbar sein. Hierdurch kann der chemische Indikator in industriellem Maßstab hergestellt werden.

Die Indikatormischung und der chemische Indikator sollen hierbei nicht auf die oben beschriebene Anwendung und Ausführungsform beschränkt sein. Insbesondere können die Indikatormischung und der chemische Indikator zu einer Erfüllung einer hierin beschriebenen Funktionsweise eine von einer hierin genannten Anzahl von einzelnen Elementen und Substanzen abweichende Anzahl aufweisen.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

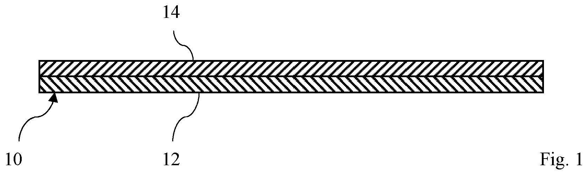

- Fig. 1: Eine schematische Darstellung eines erfindungsgemäßen chemischen Indikators mit einer erfindungsgemäßen Indikatormischung in einer Querschnittsansicht.

Figur 1 zeigt einen chemischen Indikator 10. Der chemische Indikator 10 ist als ein einseitiges Klebeband ausgebildet. Der chemische Indikator 10 ist dazu vorgesehen, mit einem zu bestrahlenden Objekt (nicht dargestellt) verbunden zu werden und mittels eines Farbumschlags die Bestrahlung kenntlich zu machen. Die Bestrahlung ist als UV-Bestrahlung ausgebildet. Der chemische Indikator 10 weist einen Träger 12 auf. Der Träger 12 ist als ein Papierband ausgebildet. Alternativ könnte der Träger 12 auch aus anderen Materialien bestehen, beispielsweise könnte der Träger 12 als eine Folie ausgebildet sein.

Der chemische Indikator 10 weist einen Klebefilm 14 auf. Der Träger 12 ist mit dem Klebefilm 14 beschichtet. Der Klebefilm 14 weist eine Indikatormischung auf. Die Indikatormischung weist einen Farbstoff auf. Der Farbstoff weist eine halochromische Substanz auf. Die halochromische Substanz ist als ein Anthrachinon ausgebildet. Die halochromische Substanz ist als 1,4-Bis(butylamino)antrachinon ausgebildet. Alternativ oder zusätzlich könnte der Farbstoff weitere Substanzen aufweisen, welche ebenfalls halochromisch oder auch thermochromisch, photochromisch und/oder ionochromisch sein können. Eine Grundfarbe des Farbstoffs ist blau.

Die Indikatormischung weist einen Photosensibilisator auf. Ein Absorptionsbereich des Photosensibilisators liegt im UV-Bereich. Der Photosensibilisator weist ein Isopropylthioxanthon auf. Der Photosensibilisator weist 2-Isopropylthioxanthon auf. Alternativ oder zusätzlich kann der Photosensibilisator weitere Substanzen aufweisen, deren Absorptionsbereiche im UV-Bereich liegen. Der Photosensibilisator liegt in einem Grundzustand vor. Bei der Bestrahlung des zu bestrahlenden Objekts geht der Photosensibilisator in einen angeregten Zustand über und bildet gemeinsam mit dem Farbstoff einen Exciplex aus. In dem Exciplex weist der Farbstoff eine Exciplex-Farbe auf. Die Exciplex-Farbe ist grün-gelblich.

Die Indikatormischung ist Teil einer Beschichtungsmasse. Die Beschichtungsmasse ist als eine Haftklebemasse ausgebildet und weist einen Klebstoff auf. Der Klebstoff ist als ein mittels UV-Strahlung vernetzender Klebstoff ausgebildet. Der Klebstoff liegt in einem unvernetzten Zustand vor. Der Klebstoff ist haftklebrig ausgebildet. Der Klebstoff weist eine feste Form auf. Alternativ kann der Klebstoff auch frei von klebenden Oberflächen sein, in diesem Fall könnte der chemische Indikator 10 zusätzlich einen weiteren Klebefilm (nicht dargestellt) aufweisen, welcher haftklebrig und auf den Klebefilm 14 aufkaschiert ist. Nach der Bestrahlung des zu bestrahlenden Objekts liegt der Klebstoff in einem vernetzten Zustand vor. Der Klebstoff ist in dem vernetzten Zustand frei von klebenden Oberflächen. Der Klebstoff weist eine Mischung von aromatischen und cycloaliphatischen Epoxidharzen auf, alternativ könnte der Klebstoff auch nur ein Epoxidharz, zumindest ein Acrylat und/oder zumindest ein Polyurethan aufweisen. Ferner weist der Klebstoff einen Filmbildner, epoxidierte Polyetherverbindung und ein oder mehrere Polyole auf. Alternativ oder zusätzlich kann der Klebstoff weitere Additive und/oder Füllstoffe aufweisen.

Die Beschichtungsmasse weist einen Vernetzer auf. Der Vernetzer ist dazu vorgesehen, eine Vernetzungsreaktion durch eine von dem Photosensibilisator an den Vernetzer übertragene Aktivierungsenergie zu initiieren. Alternativ könnte der Vernetzer auch die Vernetzungsreaktion unabhängig von dem Photosensibilisator initiieren. Der Vernetzer weist einen kationischen Initiator auf. Der kationische Initiator ist als Bis(triphenylsulfoniumhexafluorophosphat) (Omnicat 432 der Firma IGM Resins) ausgebildet. Alternativ oder zusätzlich kann der Vernetzer andere kationische oder anionische Initiatoren aufweisen.

Das Masseverhältnis von Photosensibilisator und Farbstoff im Klebefilm 14 beträgt 40-80: 1, wobei dasselbe Masseverhältnis auch gilt, wenn die Indikatormischung getrennt von dem Klebstoff und dem Vernetzer betrachtet wird. In folgender Tabelle sind einige beispielhafte Rezepturen für den Klebefilm 14 aufgeführt:

| Rezeptur | Klebstoff [g] | Vernetzer [g] | Photosensibilisator [g] | Farbstoff [mg] |
|---|---|---|---|---|
| 1 | 50 | 5 | 0,5 | 8 |
| 2 | 50 | 5 | 0,5 | 12 |
| 3 | 50 | 2,5 | 0,5 | 8 |

### Bezugszeichen

- 10: Chemischer Indikator
- 12: Klebefilm
- 14: Träger

## Patentansprüche

1. Indikatormischung mit zumindest einem Farbstoff und zumindest einem Photosensibilisator, welche zur gemeinsamen Verwendung mit zumindest einer Beschichtungsmasse und zumindest einem Vernetzer vorgesehen ist, wobei der Farbstoff als ein Anthrachinon und der Photosensibilisator als ein Isopropylthioxanthon ausgebildet sind und wobei das Masseverhältnis von Photosensibilisator und Farbstoff 10 - 100:1 beträgt, was so verstanden werden soll, dass auf 1 Milligramm des Farbstoffs 10-100 Milligramm des Photosensibilisators folgen.

2. Beschichtungsmasse, aufweisend die Indikatormischung nach einem der vorhergehenden Ansprüche und den Vernetzer.

3. Beschichtungsmasse nach Anspruch 2, **dadurch gekennzeichnet, dass** die Beschichtungsmasse als eine Klebstoffmasse ausgebildet ist und zumindest einen Klebstoff aufweist.

4. Beschichtungsmasse nach Anspruch 3, **dadurch gekennzeichnet, dass** der Klebstoff zumindest ein Epoxidharz aufweist.

5. Beschichtungsmasse nach einem der Ansprüche 2 bis 4, **dadurch gekennzeichnet, dass** der Vernetzer zumindest einen kationischen Initiator aufweist.

6. Chemischer Indikator (10) mit zumindest einem Träger (12) und der Indikatormischung nach Anspruch 1.

7. Chemischer Indikator (10) nach Anspruch 6, **gekennzeichnet durch** die Klebstoffmasse nach Anspruch 3 oder 4, wobei die Klebstoffmasse einen Klebefilm (14) ausbildet, mit dem der Träger (12) beschichtet ist.

## Claims

1. Indicator mixture comprising at least one dye and at least one photosensitizer, configured to be used together with at least one coating mass and at least one curing agent, wherein the dye is an anthraquinone and the photosensitizer is an isopropylthioxanthone and a mass ratio of the photosensitizer and dye is 10-100:1, which is to be understood as 1 milligram of dye being present for every 10-100 milligram of photosensitizer.

2. Coating mass, comprising the indicator mixture according to any of the preceding claims and the curing agent.

3. Coating mass according to claim 2, **characterized in that** the coating mass is an adhesive mass and comprises at least one adhesive.

4. Coating mass according to claim 3, **characterized in that** the adhesive comprises at least one epoxy resin.

5. Coating mass according to any of the claims 2 to 4, **characterized in that** the curing agent comprises at least one cationic initiator.

6. Chemical indicator (10) comprising at least one carrier (12) and the indicator mixture according to claim 1.

7. Chemical indicator (10) according to claim 6, **characterized by** the adhesive mass according to claim 3 or 4, wherein the adhesive mass forms an adhesive film (14) which is coated onto the carrier (12).

## Revendications

1. Mélange indicateur comprenant au moins un colorant et au moins un photosensibilisateur, conçu pour être utilisé avec au moins une masse de revêtement et au moins un agent de durcissement, le colorant étant une anthraquinone et le photosensibilisateur étant une isopropylthioxanthone et le rapport massique du photosensibilisateur et du colorant étant de 10-100:1, ce qui signifie qu'un milligramme de colorant est présent pour 10-100 milligrammes de photosensibilisateur.

2. Masse de revêtement comprenant le mélange indicateur selon l'une quelconque des revendications précédentes et l'agent de durcissement.

3. Masse de revêtement selon la revendication 2, **caractérisée en ce que** la masse de revêtement est une masse adhésive et comprend au moins un adhésif.

4. Masse de revêtement selon la revendication 3, **caractérisée en ce que** l'adhésif comprend au moins une résine époxy.

5. Masse de revêtement selon l'une quelconque des revendications 2 à 4, **caractérisée en ce que** le durcisseur comprend au moins un initiateur cationique.

6. Indicateur chimique (10) comprenant au moins un support (12) et le mélange indicateur selon la revendication 1.

7. Indicateur chimique (10) selon la revendication 6, **caractérisé par** la masse adhésive selon la revendication 3 ou 4, la masse adhésive formant un film adhésif (14) qui est appliqué sur le support (12).
